# EUROPÄISCHE PATENTSCHRIFT

(11) **EP 3 972 944 B1**
(45) Veröffentlichungstag und Bekanntmachung des Hinweises auf die Patenterteilung: **09.07.2025**
(21) Anmeldenummer: 20717128.1
(22) Anmeldetag: 31.03.2020
(51) Int. Cl.: C04B 20/10, C04B 26/18

(54) **LEICHTER VERBUNDWERKSTOFF MIT KRATZFESTER OBERFLÄCHE UND VERFAHREN ZU DESSEN HERSTELLUNG**
LIGHTWEIGHT COMPOSITE MATERIAL HAVING A SCRATCH-RESISTANT SURFACE AND PROCESS FOR PRODUCTION THEREOF
MATÉRIAU COMPOSITE LÉGER À SURFACE ANTIRAYURES ET SON PROCÉDÉ DE PRODUCTION

(30) Priorität: 20.05.2019 DE 102019113330
(43) Veröffentlichungstag der Anmeldung: 30.03.2022
(73) Patentinhaber: Gebrüder Dorfner GmbH & Co. Kaolin- und Kristallquarzsand-Werke KG, 92242 Hirschau (DE)
(72) Erfinder: HOLTMANN, Klaus, 92224 Amberg (DE); SÜSS, Marco, 92439 Bodenwöhr (DE); HEYEN, Kirstin, 92256 Hahnbach (DE)
(74) Vertreter: Hannke Bittner & Partner mbB Regensburg
(86) Internationale Anmeldenummer: PCT/EP2020/059116
(87) Internationale Veröffentlichungsnummer: WO 2020/233880

(56) Entgegenhaltungen:
- JP-A- 2001 132 137
- PL-B1- 227 566

## Beschreibung

Die vorliegende Erfindung betrifft einen leichten Verbundwerkstoff mit kratzfester Oberfläche und ein Verfahren zur Herstellung eines solchen Verbundwerkstoffs.

Aus dem Stand der Technik sind Verbundwerkstoffe bekannt, die in vielen Bereichen Anwendung finden können. Wichtige Anwendungsbereiche für Verbundwerkstoffe, beispielsweise aus Mineralgut, sind Beschichtungen von Fußboden- oder Wandflächen, Sanitärprodukte wie Waschbecken, Duschtassen oder auch Küchenspülen. Verstärkt werden Verbundwerkstoffe auch im Möbelbau eingesetzt. Insbesondere bei der Verwendung von Verbundwerkstoffen als Arbeitsfläche, beispielsweise in einer Küche, werden an den Verbundwerkstoff hohe Anforderungen hinsichtlich dessen Belastbarkeit gestellt. In diesen Bereichen sind Verbundwerkstoffe hohen mechanischen und thermischen Belastungen ausgesetzt. Außerdem sind sie üblicherweise sehr gut einsehbar, so dass sie auch dauerhaft ein ansprechendes Erscheinungsbild bieten sollen. Die sichtbare Oberfläche sollte eine möglichst variable Oberflächenrauigkeit aufweisen, möglichst porenfrei und leicht zu reinigen sein. Außerdem sollte sie diese Eigenschaft dauerhaft beibehalten und beispielsweise bei Küchenarbeit nicht beschädigt werden. Insbesondere Beschädigungen der Oberfläche durch Schnitte sollten vermieden werden.

In der Vergangenheit wurden für diese Anwendungen vermehrt acrylat- oder polyestergebundene Verbundwerkstoffe eingesetzt, die durch zum Teil gefärbte Füllstoffe wie beispielsweise Granulate oder Mischungen von Granulaten mit Effektpigmenten gewünschte optische Oberflächeneigenschaften verliehen werden können. Derartige Verbundwerkstoffe bestehen zum Beispiel aus eingefärbtem Quarzsand in einer Polymermatrix aus z.B. Polyester, Acrylharz, PU-Harz. Diese Verbundwerkstoffe enthalten in der Regel zwischen 60 und 80 Gewichts-% mineralischen Füllstoff unterschiedlicher Körnung. Diese Werkstoffe werden in der Regel über ein Gießverfahren hergestellt. Dazu wird eine Mischung aus mineralischem Füllstoff und Polymerbinder gemischt und anschließend in eine Form beispielsweise aus Metall oder GFK gefüllt. In dieser Form härtet das Polymer aus und der Verbundwerkstoff entsteht in seiner endgültigen Form.

Insbesondere von Interesse sind bei derartigen Verbundwerkstoffen Oberflächen, die ein granitähnliches oder sandsteinähnliches Aussehen aufweisen. Um ein derartiges Erscheinungsbild ausbilden zu können, werden als Füllstoff bevorzugt Farbsandmischungen unterschiedlicher Farben genutzt oder dem Bindemittel Pigmente zugesetzt. Als ein besonders gut zur Herstellung derartiger Verbundwerkstoffe geeignetes Verfahren hat sich das "solid surface"-Verfahren etabliert. Bei diesem einstufigen Verfahren wird eine Mischung aus anorganischen Füllstoffen mit einem organischen Bindemittel gemischt und direkt in eine Gussform gefüllt, in der die Masse aushärtet. Die so hergestellten Verbundwerkstoffe sind in der Gesamtheit eingefärbt, so dass sie den Vorteil bieten, dass auch bei Abplatzungen an der Oberfläche keine deutlich erkennbaren Farbunterschiede auftreten. Als gängige Materialien, die in diesem Verfahren eingesetzt werden können, haben sich Aluminiumtrihydroxid (ATH) und Acryl- oder Polyesterharz etabliert. Auch als Quaryl bezeichnete Mischungen aus u. a. Cristobalit und Acrylharz hat sich etabliert. Derartige Verbundwerkstoffe sind in der Regel farblich homogen. Granit/Sandsteinähnliche Strukturen werden durch die Zugabe von eingefärbtem Granulat unterschiedlicher Größe und Farbe aus gleichartigem Verbundwerkstoff hergestellt. Die Granulate haben dabei keinen Einfluss auf die mechanischen Eigenschaften.

Neben den Anforderungen an die Kratz- beziehungsweise Schnittbeständigkeit der Oberflächen (z. B. DIN 68861-4) werden an derartige Verbundwerkstoffe auch hohe Anforderungen hinsichtlich der Beständigkeit von Temperaturänderungen gestellt. Veränderungen der Farbe oder Verformungen sollten beispielsweise beim Abstellen eines noch heißen Topfes möglichst nicht auftreten (z. B. DIN EN ISO 19722-2).

Neben dem oben dargestellten Herstellungsverfahren ist für plattenförmige Werkstücke wie Arbeitsplatten und Wandpaneele aus dem Stand der Technik auch das sogenannte Breton Verfahren bekannt. Dabei wird der - meist auf Quarz basierende - mineralische Füllstoff üblicherweise mit einem Gewichtsanteil > 80 % mit einem Polymer gemischt und nach Einfüllen in eine Form in dieser durch mechanischen Druck porenfrei verdichtet. Das Polymer härtet in der Form aus, so dass anschließend der geformte Verbundwerkstoff entnommen werden kann.

Für besondere optische Effekte wird bei diesem Verfahren jedoch statt einzelner Platten vorgegebener Dicke zunächst eine quaderförmige Form, mit einer Mischung ausgewählter Mineralien (z. B. Quarz) und Polymermaterial gefüllt und durch mechanischen Druck porenfrei verdichtet. Nach dem Aushärten des Polymers in der Quaderform werden anlog zur Natursteinbearbeitung aus dem entstandenen Verbundwerkstoffquader Platten definierter Dicke gesägt und nachbehandelt. Insbesondere ist mechanisches Polieren notwendig, um die gewünschten Oberflächeneigenschaften zu erhalten.

Die mechanische Belastbarkeit der Oberfläche wird im Wesentlichen durch die Auswahl der Füllstoffe bestimmt. Bei der Verwendung von harten Mineralien (beispielsweise einer Mohshärte > 5) wie z. B. Quarz weisen die nach dem oben beschriebenen Verfahren hergestellten Verbundwerkstoffe üblicherweise einen Abrieb von unter 30 mg pro 100 Zyklen gemessen nach dem Taber Abrasor Verfahren (Din EN 13310) auf. Höhere Anteile von mineralischen Füllstoffen und größere mineralische Partikel haben dabei üblicherweise einen positiven Effekt auf das Abriebverhalten. Die Auswahl des Bindemittels hat demgegenüber einen geringeren Einfluss auf die Abriebbeständigkeit.

PL227566 offenbart ein Verfahren zur Herstellung eines Verbundwerkstoffes bei dem Nickeloxidpulver, das durch eine höhere Dichte gekennzeichnet ist langsam sedimentiert, wodurch ein Konzentrationsgradient erzeugt wird. Die erhaltenen Formteile werden getrocknet und dann wird das polymere Bindemittel gehärtet.

Nachteile der aus dem Stand der Technik bekannten Werkstoffe mit hoher Abriebfestigkeit liegen insbesondere in der großen Dichte der Verbundwerkstoffe und in der eingeschränkten Möglichkeit der Nachbearbeitung, die - wenn überhaupt - lediglich mit Spezialwerkzeug möglich ist.

Die Dichte eines solchen Verbundwerkstoffs steigt mit dem Anteil der mineralischen Füllstoffe an und führt bei den für die gewünschte Oberflächenbeständigkeit notwendigen hohen Füllgraden mit z. B. Quarz zu einer Dichte des Verbundwerkstoffs von etwa 2,2 - 2,5 kg/l. ein Quadratmeter einer lediglich 10 mm dicken Arbeitsplatte wiegt demnach bereits an die 25 kg. Insbesondere bei größeren Bauteilen wie sie im Möbelbau und insbesondere bei (Küchen-) Arbeitsplatten eingesetzt werden, sind daher mehrere Monteure oder aber mechanische Hilfsmittel für die Montage vor Ort erforderlich.

Derartige Bauteile sind darüber hinaus vor Ort nicht mehr mit üblichem Werkzeug nachbearbeitbar. Dies hat zur Folge, dass die Bauteile vor dem Transport zum Einsatzort bereits mit Steinbearbeitungswerkzug auf die endgültigen Maße zugeschnitten, Durchgangsöffnungen gebohrt, und Aussparungen (z. B. zum Einsetzen einer Küchenspüle oder eines Herdes) eingebracht werden müssen. Dies erschwert die Montage deutlich und ist mit hohen Vorlaufzeiten und komplexer Logistik verbunden.

Es ist daher Aufgabe der Erfindung, einen Verbundwerkstoff und ein Verfahren zu dessen Herstellung bereitzustellen, das die oben beschriebenen Nachteile nicht aufweist und in einem einfachen, kostengünstigen und einstufigen Prozess möglichst in ebenfalls kostengünstigen GFK-Formen oder auf oder zwischen Glasplatten, vorzugsweise aus Einscheibensicherheitsglas herzustellen ist. Ein solcher Verbundwerkstoff sollte sowohl gut und möglichst mit üblichem Werkzeug nachzubearbeiten sein und dabei trotzdem kratz- und abriebbeständig sein.

Diese sollte eine hohe mechanische Beständigkeit aufweisen und beispielsweise einen Abrieb, welcher als Materialverlust beim Taber Abrasor Test ermittelt wird von < 30 mg pro 100 Zyklen aufweisen. Ergänzend oder alternativ dazu sollte die Kratzhärte nach DIN 68861-4, möglichst im Bereich ≥ 1,5 bis ≤ 2 N liegen.

Darüber hinaus sollten die durch DIN 68861 und / oder DIN EN ISO 19722 vorgegebenen Anforderungen an Arbeitsplatten eingehalten werden.

Die Dichte des Verbundwerkstoffs sollte möglichst deutlich unter 2 kg/l liegen, bevorzugt im Bereich zwischen 1,2 und 1,5 kg/l.

Die Nacharbeitung am Einbauort sollte mit Werkzeugen möglich sein, wie sie z. B. bei Schreinern, Fliesenlegern oder Installateuren üblich sind. Die Bearbeitung sollte im trockenen Zustand, also bevorzugt ohne Wasserkühlung möglich sein und es darf bei der mechanischen Bearbeitung (z. B. Sägen) kein Funkenflug auftreten.

Verfahrensseitig sollte ein solcher Verbundwerkstoff möglichst einfach herstellbar sein. Insbesondere ist ein einstufiges Verfahren bevorzugt, das ohne einen Schritt eines nachträglichen Aufbringens einer harten oder härtenden Oberflächenbeschichtung auskommt.

Gelöst wird diese Aufgabe durch einen Verbundwerkstoff, welcher mindestens ein Bindemittel und mindestens einen ersten und mindestens einen zweiten Füllstoff umfasst, wobei der erste Füllstoff eine Dichte > 2 kg/l und eine Härte nach Mohs > 4, bevorzugt > 4,5, weiter bevorzugt > 5 aufweist und der zweite Füllstoff eine Schüttdichte < 2,5 kg/l, bevorzugt < 1,5 kg/l, bevorzugt < 1 kg/l, bevorzugt < 0,8 kg/l, bevorzugt < 0,6 kg/l, weiter bevorzugt < 0,5 kg/l, insbesondere bevorzugt < 0,4 kg/l, meist bevorzugt < 0,3 kg/l, weiter bevorzugt < 0,2 kg/l aufweist. Die Partikel des zweiten Füllstoffs sind ausgewählt aus einer Gruppe, die Polymerhohl- kugeln Polymergranulate, Glashohlkugeln, synthetische poröse Glas oder Keramikkugeln, Zeolith, Aluminiumtrihydroxid, expandierten Perlit und Bimsstein umfasst.

Der erfindungsgemäße Verbundwerkstoff zeichnet sich weiterhin insbesondere dadurch aus, dass die Konzentration des ersten Füllstoffs im Verbundwerkstoff ausgehend von einer ersten Oberfläche des Verbundwerkstoffs in Richtung einer gegenüberliegenden zweiten Oberfläche des Verbundwerkstoffs abnimmt. Diese Abnahme kann durch eine stetige Funktion beschrieben werden. Bevorzugt folgt die Abnahme der Konzentration des ersten Füllstoffs im Verbundwerkstoff ausgehend von der ersten Oberfläche in Richtung der gegenüberliegenden zweiten Oberfläche dieser stetigen Funktion. Diese Funktion kann einen geradlinigen Verlauf haben oder gekrümmt sein. Bevorzugt ist diese Funktion eine Exponentialfunktion, insbesondere mit einer Basis < 1. Bevorzugt weisen die Partikel des ersten und des zweiten Füllstoffs mindestens eine Eigenschaft auf, die eine Trennung oder mindestens eine An- oder Abreicherung innerhalb bestimmter Bereiche des Verbundwerkstoffs vor dessen Aushärtung ermöglichen.

Die Konzentration des zweiten Füllstoffs im Verbundwerkstoff nimmt bevorzugt ausgehend von dieser ersten Oberfläche des Verbundwerkstoffs in Richtung der gegenüberliegenden zweiten Oberfläche des Verbundwerkstoffs zumindest abschnittsweise zu. "Zumindest abschnittsweise" soll in diesem Zusammenhang bedeuten, dass diese Zunahme nicht über die gesamte Strecke zwischen den beiden Oberflächen des Verbundwerkstoffs verlaufen muss. Vielmehr wäre es denkbar, dass in einigen Bereichen die Konzentration des zweiten Füllstoffs im Verbundwerkstoff konstant ist. Beispielsweise könnte im Bereich einer der genannten Oberflächen die Konzentration des zweiten Füllstoffs = 0 sein und der zweite Füllstoff erst ab einer bestimmten Entfernung von dieser ersten Oberfläche vorkommt. Weiterhin wäre denkbar, dass die Konzentration des zweiten Füllstoffs ab einer bestimmten Entfernung von der ersten Oberfläche einen Sättigungswert cₘₐₓ erreicht und somit die Konzentration mit zunehmender Entfernung von der ersten Oberfläche nicht weiter zunimmt. Es ist jedoch bevorzugt, dass die Zunahme der Konzentration des zweiten Füllstoffs im Verbundwerkstoff ausgehend von der ersten Oberfläche des Verbundwerkstoffs in Richtung der gegenüberliegenden zweiten Oberfläche des Verbundwerkstoffs durch eine stetige Funktion beschrieben werden kann. Bevorzugt folgt die Zunahme der Konzentration des zweiten Füllstoffs im Verbundwerkstoff ausgehend von der ersten Oberfläche in Richtung der gegenüberliegenden zweiten Oberfläche dieser stetigen Funktion. Diese Funktion kann einen geradlinigen Verlauf haben oder gekrümmt sein. Bevorzugt ist diese Funktion eine Logarithmusfunktion, insbesondere mit einer Basis > 1.

Eine stetige Abnahme der Konzentration des ersten Füllstoffs im Verbundwerkstoff ausgehend von einer ersten Oberfläche des Verbundwerkstoffs in Richtung einer gegenüberliegenden zweiten Oberfläche des Verbundwerkstoffs wird im Folgenden auch als (Konzentrations-) Gradient bezeichnet. Analog dazu wird auch die stetige Zunahme der Konzentration des zweiten Füllstoffs im Verbundwerkstoff in einem Bereich zwischen der ersten Oberfläche des Verbundwerkstoffs und der weiten Oberfläche des Verbundwerkstoffs in Richtung der zweiten Oberfläche als Gradient bezeichnet.

Bevorzugt handelt es sich bei der ersten und der zweiten Oberfläche um diejenigen Flächen des Verbundwerkstoffs, welche die größte Oberfläche aufweisen. Die erste und die zweite Oberfläche sind bevorzugt eben, können aber auch bei der ebenen Ausgestaltung in Teilbereichen eine Krümmung aufweisen, beispielsweise abgerundete Kanten. Bevorzugt erstrecken sich die erste und die zweite Oberfläche des Verbundwerkstoffs (zumindest im Wesentlichen) parallel zueinander. Die erste Oberfläche bildet dabei bevorzugt (beispielsweise bei Möbel oder Arbeitsplatten) die Sichtseite. Im Bereich dieser ersten Oberfläche ist Konzentration des dichteren ersten Füllstoffs größer als im Bereich der zweiten Oberfläche.

Die Oberflächen des Verbundwerkstoffs, insbesondere die erste und / oder die zweite Oberfläche, können unabhängig voneinander glatt oder strukturiert (beispielsweise ähnlich Schiefer) sein.

Bevorzugt weist ein Verbundwerkstoff eine im Wesentlichen quaderförmige Geometrie auf. Da insbesondere eine Verwendung eines solchen Verbundwerkstoffs als (Küchen-) Arbeitsplatte bevorzugt ist, weist ein solcher Quader in einer Richtung, bevorzugt in Höhenrichtung, eine deutlich geringere Ausdehnung auf als in den beiden anderen Richtungen, nämlich Längen- und Breitenrichtung. Insbesondere ist bevorzugt, dass die Ausdehnung in Höhenrichtung weniger als 10% jeder der beiden anderen Richtungen beträgt. Insbesondere ist eine Ausdehnung des Verbundwerkstoffs in Höhenrichtung von ≤ 10 cm, bevorzugt ≤ 7 cm, bevorzugt ≤ 6 cm, besonders bevorzugt ≤ 5 cm, bevorzugt ≤ 4 cm, besonders bevorzugt ≤ 3 cm vorgesehen. Bevorzugt ist, dass der Verbundwerkstoff als Platte ausgebildet ist und insbesondere bevorzugt eine Stärke (Höhe) von 1 - 5 cm hat.

Bevorzugt ist, dass sich der (Konzentrations-) Gradient des ersten Füllstoffs im Verbundwerkstoff entlang einer (Höhen-) Richtung erstreckt, in der der Verbundwerkstoff eine minimale Ausdehnung hat. Bei der beispielsweisen Nutzung eines solchen Verbundwerkstoffs als Arbeitsplatte ist somit insbesondere bevorzugt vorgesehen, dass die Konzentration des ersten Füllstoffs im Verbundwerkstoff an einer oberen Oberfläche am höchsten ist und von dort ausgehend in Richtung der unteren Oberfläche der Arbeitsplatte abnimmt. Die Konzentration des zweiten Füllstoffs im Verbundwerkstoff ist in diesem Zustand an einer oberen Oberfläche am geringsten und nimmt von dort ausgehend in Richtung der unteren Oberfläche der Arbeitsplatte zu.

Ein wie oben beschriebener Verbundwerkstoff weist bevorzugt ein isotropes körniges Material als Füllstoff und ein (vor dem Aushärten) viskoses Harz auf.

Die Viskosität des Harzes beziehungsweise Bindemittels (die Begriffe Harz und Bindemittel werden im Rahmen dieser Erfindung synonym verwendet) beträgt bevorzugt ≥ 25 mPa•s, bevorzugt ≥ 50 mPa•s, bevorzugt ≥ 100 mPa•s, besonders bevorzugt ≥ 250 mPa•s, insbesondere bevorzugt ≥ 300 mPa•s, für einige Anwendungen jedoch sogar ≥ 500 mPa•s oder ≥ 750 mPa•s. Ergänzend oder alternativ dazu beträgt die Viskosität des Harzes bevorzugt ≤ 10.000 mPa•s, bevorzugt ≤ 5.000 mPa•s, bevorzugt ≤ 1.200 mPa•s, besonders bevorzugt ≤ 750 mPa•s, insbesondere bevorzugt ≤ 500 mPa•s. Bevorzugt liegt eine wie oben angegebene Viskosität des Harzes zumindest zum Zeitpunkt des Einfüllens in eine Gießform vor. Insbesondere bei der Verwendung eines Acrylharzes ist eine Viskosität um etwa 300 mPa•s (± 100 mPa•s) und bei der Verwendung eines Polyesterharzes eine Viskosität ≥ 300 bis ≤ 1200 mPa•s (jeweils ± 100 mPa•s) bevorzugt, wobei insbesondere die jeweils niedrigen Viskositäten der jeweiligen Bereiche bevorzugt sind. Bei der Verwendung eines PU-Harzes ist ebenfalls eine Viskosität ≥ 300 bis ≤ 1200 mPa•s (jeweils ± 100 mPa•s) bevorzugt, wobei auch hier insbesondere die Auswahl einer Viskosität aus dem niedrigeren Teilbereich, also etwa zwischen 300 und 800 mPa•s, besonders bevorzugt zwischen 300 und 500 mPa•s, bevorzugt ist.

Eine Viskosität in einem der oben definierten Bereiche ermöglicht es, dass die ersten und zweiten Füllstoffe bis zum Zeitpunkt des Erreichens des Gelpunkts (an welchem das Harz Eigenschaften eines Festkörpers annimmt und ein E-Modul aufweist) eine gewisse Mobilität innerhalb des Bindemittels aufweisen können und sich entsprechend ihrer Dichte in bestimmten Bereichen der Gießform an- beziehungsweise abreichern können. Die Partikel des ersten Füllstoffs und die Partikel des zweiten Füllstoffs unterscheiden sich dazu in mindestens einer Eigenschaft, die eine Trennung und/oder eine An- oder Abreicherung innerhalb vorgegebener Bereiche des Verbundwerkstoffs vor dessen Aushärtung ermöglicht. Die unterscheidende Eigenschaft ist bevorzugt ausgewählt aus einer Gruppe, die Dichte, Korngröße (Sedigraph), Morphologie und Kontaktwinkel zum Bindemittel umfasst. Die beispielsweise dichteren Partikel des ersten Füllstoffs werden sich aufgrund der Gravitationskraft bevorzugt im unteren Bereich der Gießform ansammeln, während die Partikel des zweiten Füllstoffs geringerer Dichte und / oder kleinerer Korngröße bevorzugt im oberen Bereich der Gießform angeordnet sind. Nach dem Aushärten des Verbundwerkstoffs in der Gießform weist dieser an der Unterseite eine höhere Konzentration der Partikel des ersten Füllstoffs auf, wohingegen die Konzentration der Partikel des zweiten Füllstoffs im oberen Bereich höher ist. Eine lokale An- oder Abreicherung der Partikel des ersten Füllstoffs und der Partikel des zweiten Füllstoffs über von der Dichte unabhängige Parameter wie beispielsweise die Korngröße ist insbesondere bei Verbundwerkstoffen mit homogener Oberflächenfarbe bevorzugt. Ist beispielsweise eine homogen weiße Arbeitsplatte gewünscht, Könnte beispielsweise ein feinkörniges ATH als zweiter Füllstoff und ein grobkörnigerer erster Füllstoff wie beispielsweise Cristobalit verwendet werden. Der erste Füllstoff ist insbesondere bevorzugt opak weiß.

Aufgrund der einseitig höheren Konzentration der härteren und dichteren oder gröberen Partikel des ersten Füllstoffs weist der Verbundwerkstoff in diesem Bereich eine größere Dichte und / oder Härte als auf der anderen Seite auf. Diese härtere Seite entsteht während des Gießprozesses an der Unterseite der Gießform. Im Verwendungszustand, beispielsweise als (Küchen-) Arbeitsplatte ist diese Seite jedoch oftmals die Oberseite oder Sichtseite. Da diese Seite während des Aushärtens auf der (bevorzugt ebenen) Unterseite der Gießform aufliegt und durch die darüberliegende Gießmasse druckbeaufschlagt ist, ist diese üblicherweise sehr glatt und weist bereits ohne Nachbearbeitung hervorragende optische Eigenschaften auf. Eine eventuell gewünschte Nachbehandlung, beispielsweise Politur oder Auftragen eines Glanzmittels ist jedoch optional möglich (z. B. nach einer Reparatur), jedoch meist nicht notwendig. Es ist somit möglich, einen Verbundwerkstoff in einem einstufigen Prozess herzustellen, der eine Oberflächenschicht mit gewünschten optischen Eigenschaften und der gewünschten Abriebbeständigkeit aufweist. Aufgrund der lediglich lokalen Anreicherung der ersten Füllstoffpartikel und der Anreicherung der zweiten Füllstoffpartikel in den der Sichtfläche abgewandten übrigen Bereichen zeichnet sich der Verbundwerkstoff insgesamt durch eine geringe Dichte und leichte mechanische Bearbeitbarkeit aus.

Neben einem einstufigen Fertigungsprozess ist ein weiterer Vorteil des stetigen Verlaufs des Konzentrationsgradienten eine Minimierung des (lokalen) Unterschieds im Wärmeausdehnungskoeffizient entlang der Höhe des Verbundwerkstoffs. Anders als bei einem zweischichtigen Sandwichaufbau, beispielsweise aus Deckschicht, Verklebung und Substrat, liegt im oben beschriebenen Verbundwerkstoff bevorzugt kein Bereich vor, in dem eine sprunghafte Änderung des Wärmeausdehnungskoeffizienten auftritt. Ein solcher Bereich könnte zu einem sogenannten "Bimetall"-Effekt führen. Dieser hätte zur Folge, dass bei der Abkühlung und Aushärtung des Bindemittels insbesondere bei dünnen Platten mit geringem Biegemoment eine Verformung der Platten auftreten könnte. Selbst wenn der Verformung entgegengewirkt werden könnte, würde dennoch mindestens eine Scherbeanspruchung der Grenzschicht im Bereich der sprunghaften Änderung des Wärmeausdehnungskoeffizienten auftreten, wodurch langfristig eine Delamination auftreten könnte. Eine diesbezügliche Dauerbeständigkeit könnte beispielsweise durch die Messung der Temperaturbeständigkeit gemäß der Prüfnorm AMK-MB-01 ermittelt werden.

Es hat sich bei den Versuchen überraschend herausgestellt, dass bei dem graduellen Verlauf der Konzentrationsänderung zumindest der ersten Füllstoffpartikel (gegebenenfalls durch Einstellung einer geeigneten Viskosität des Bindemittels, der Mischung Füllstoff-Bindemittel oder Einstellung der Gelzeit) die Verformung des Verbundwerkstoffs durch unterschiedlichen Schrumpf beim Polymerisieren vollständig vermieden oder zumindest nahezu ausgeschlossen werden kann. Der oben beschriebene Bimetalleffekt tritt somit nicht oder nur in minimaler Stärke auf.

Die Vermeidung einer sprunghaften Änderung des Wärmeausdehnungskoeffizienten kann insbesondere bevorzugt dadurch vermieden werden, dass ein gradueller Übergang zwischen abriebfester Schicht und Substrat erreicht wird und der Füllgrad des Verbundwerkstoff durch die Zunahme der Konzentration der zweiten Füllstoffe über die Höhe des Verbundwerkstoffs zumindest im Wesentlichen konstant ist. Der Schrumpf der des Bindemittels während dessen Polymerisation ist somit in allen Bereichen des Verbundwerkstoffs in Wesentlichen gleich, so dass dadurch keine Verformung begünstigt wird.

In einer bevorzugten Ausführungsform sind die Partikel des ersten Füllstoffs ausgewählt aus einer Gruppe, die Quarz, Calziumcarbonat (weniger bevorzugt, da geringe Beständigkeit gegenüber Säuren), ATH (weniger bevorzugt, da die Härte von ungefähr 3 nach Mohs vergleichsweise weich ist), Insel und Struktursilikate (z.b. Feldspat), Cristoballit, Aluminiumoxid, Siliziumkarbid und Hämatit umfasst. Diese haben sich aufgrund ihrer großen Härte und großer Dichte als besonders geeignet erwiesen.

Bevorzugt weist der erste Füllstoff eine Partikelgröße (d₅₀ Sedigraph) ≥ 0,5 µm, bevorzugt ≥ 1 µm, bevorzugt ≥ 2 µm, bevorzugt ≥ 3 µm, besonders bevorzugt ≥ 5 µm, bevorzugt ≥ 10 µm, bevorzugt ≥ 20 µm auf. Ergänzend oder alternativ dazu ist bevorzugt, dass der erste Füllstoff eine Partikelgröße (d₅₀ Sedigraph) ≤ 1000 µm, bevorzugt ≤ 500 µm, bevorzugt ≤ 200 µm, bevorzugt ≤ 100 µm, bevorzugt ≤ 50 µm, bevorzugt ≤ 20 µm, bevorzugt ≤ 10 µm aufweist.

Bevorzugt sind anorganische Materialien als zweiter Füllstoff. Oben genannte Materialien haben sich aufgrund ihrer ausreichenden Härte und geringer Dichte als besonders geeignet erwiesen. Die Härte (nach Mohs) der Partikel des zweiten Füllstoffs ist bevorzugt ≥2 und ergänzend oder alternativ dazu ≤ 4, bevorzugt im Bereich von 2,5 bis 3,5 (Randwerte jeweils eingeschlossen).

Bevorzugt weist der zweite Füllstoff eine Partikelgröße (d₅₀ Sedigraph) ≥ 1 µm, bevorzugt ≥ 2 µm, besonders bevorzugt ≥ 5 µm, weiter bevorzugt ≥ 10 µm, bevorzugt ≥ 20 µm, bevorzugt ≥ 50 µm, bevorzugt ≥ 100 µm auf. Ergänzend oder alternativ dazu ist bevorzugt, dass der erste Füllstoff eine Partikelgröße (d₅₀ Sedigraph) ≤ 2000 µm, bevorzugt ≤ 1000 µm, bevorzugt ≤ 500 µm, bevorzugt ≤ 200 µm, besonders bevorzugt ≤ 100 µm, bevorzugt ≤ 50 µm, bevorzugt ≤ 20 µm, bevorzugt ≤ 10 µm aufweist.

Das Bindemittel weist bevorzugt eine Dichte auf, die zwischen der Dichte der ersten und zweiten Füllstoffe liegt. Insbesondere ist bevorzugt, dass das Bindemittel eine Dichte ≥ 0,8 kg/l, bevorzugt ≥ 0,9 kg/l, bevorzugt ≥ 1 kg/l, bevorzugt ≥ 1,1 kg/l, bevorzugt ≥ 1,2 kg/l, und ergänzend oder alternativ dazu ≤ 1,7 kg/l, bevorzugt ≤ 1,6 kg/l, bevorzugt ≤ 1,5 kg/l, bevorzugt ≤ 1,4 kg/l, bevorzugt ≤ 1,3 kg/l, bevorzugt ≤ 1,2 kg/l, bevorzugt ≤ 1,1 kg/l aufweist. Bei diesen Dichten konnte eine besonders gute An- beziehungsweise Abreicherung der jeweiligen Füllstoffe in den unterschiedlichen Bereichen entlang der Höhenausdehnung des Verbundwerkstoffs erreicht werden.

**In Versuchen** konnte gezeigt werden, dass sowohl Polymerhohlkugeln als auch Glasholkugeln geeignet sind. Es hat sich jedoch gezeigt, dass insbesondere Polymerhohlkugeln nicht zur Verstärkung der mechanischen Belastbarkeit des Verbundwerkstoffs beitragen können, sondern eher als Poren im Verbundwerkstoff anzusehen sind, die dessen Festigkeit reduzieren. Auch Glashohlkugeln haben sich als weniger bevorzugt erwiesen, da bei solchen aus Kalknatronglas oder E- Glas die Gefahr der Korrosion in der Matrix durch eindiffundierende Feuchtigkeit besteht, was zu einer Zerstörung des Verbundes führen kann. Glashohlkugeln aus korrosionsbeständigem Glas wie beispielsweise Borosilikatglas weisen dieses Problem zwar nicht auf, sind aber aufgrund ihres hohen Anschaffungspreises meist unwirtschaftlich.

Glasholkugeln weisen generell das Problem auf, dass diese bei mechanischer Belastung wie sie beispielsweise beim Mischen auftreten kann, leicht zerstört werden können. Dies hat sich insbesondere bei der gleichzeitigen Verwendung harten erster Füllstoffe als nachteilig erwiesen.

Aus diesen Gründen sind natürliche mineralische Füllstoffe mir geringer Dichte, z.B. expandierter Perlit oder Bimsstein als zweite Füllstoffe besonders bevorzugt. Diese enthalten größere Mengen an Aluminiumoxid und sind daher auch gegenüber dem Angriff von Laugen mit hohem pH-Wert oder Wasser sehr stabil. Ein weiterer Vorteil ist die Struktur dieser Natürlichen Rohstoffe, welche einem geschlossenporigen Schaum ähnelt. Die (Zell-) Wände dieser Rohstoffe könne als sehr dünne Glasschichten aufgefasst werden. Trotz einer Härte von ca. 3 nach Mohs sind derartige "Glasschäume" leicht mechanisch zu bearbeiten, da die Schichten bei punktueller mechanischer Belastung (z. B. beim Sägen) brechen. Da die Poren geschlossen sind und darüber hinaus eine mittlere Größe (Durchmesser) von lediglich wenigen µm ausweisen, wird das Eindringen von Feuchtigkeit in die Partikel des zweiten Füllstoffs verhindert. Die Kornfestigkeit dieser Füllstoffe ist hoch. Dementsprechend können sie auch im Verbundwerkstoff mechanische Belastungen abtragen.

In einer bevorzugten Ausführungsform weist der Verbundwerkstoffe einen Volumenanteil an Füllstoffen von ≥ 40%, bevorzugt ≥ 45%, besonders bevorzugt ≥ 50%, bevorzugt ≥ 60%, bevorzugt ≥ 70% und ergänzend oder alternativ dazu ≤ 80%, bevorzugt ≤ 70%, bevorzugt ≤ 60%, bevorzugt ≤ 55%, bevorzugt ≤ 50% auf. Ein Volumenanteil der Füllstoffe in diesem Bereich hat sich als vorteilhaft erwiesen, da so der Anteil des kostenintensiven Bindemittels minimiert werden kann, gleichzeitig jedoch eine ausreichende Festigkeit und Vernetzung durch das Bindemittel gewährleistet werden kann. Bei diesem Anteil können sich die Füllstoffpartikel in der Polymermatrix noch ohne große Reibung aneinander vorbei bewegen.

Bevorzugt ist eine Ausführungsform, in der der erste und der zweite Füllstoff eine unterschiedliche mittlere Partikelgröße (d₅₀ Sedigraph) aufweisen. Insbesondere ist bevorzugt, dass die mittlere Partikelgröße (d₅₀ Sedigraph) des zweiten Füllstoffs größer ist als die mittlere Partikelgröße (d₅₀ Sedigraph) des ersten Füllstoffs. Insbesondere ist bevorzugt, dass die mittlere Partikelgröße (d₅₀ Sedigraph) des zweiten Füllstoffs um einen Faktor ≥ 1,5, bevorzugt ≥ 2, besonders bevorzugt ≥ 5, weiter bevorzugt ≥ 10 und / oder um ≥ 1 µm, bevorzugt ≥ 2 µm, besonders bevorzugt ≥ 5 µm, weiter bevorzugt ≥ 10 µm, bevorzugt ≥ 20 µm, bevorzugt ≥ 50 µm größer ist als die mittlere Partikelgröße (d₅₀ Sedigraph) des ersten Füllstoffs. Durch eine solche verschiedene Korngrößenverteilung der ersten und zweiten Füllstoffe bilden die Partikel des zweiten Füllstoffs Hohlräume im Verbundwerkstoff aus, die durch die kleineren Partikeln des ersten Füllstoffs besetzt werden können.

In einer bevorzugten Ausführungsform enthält der Verbundwerkstoff ein Pigment. Dies ermöglicht, dass dem Verbundwerkstoff gewünschte optische Effekte verliehen werden können. Das Einbringen des mindestens einen Pigments kann auf verschiedenen Wegen erfolgen, wobei diese sich nicht gegenseitig ausschließen, sondern optional auch gemeinsam genutzt werden können.

Eine Möglichkeit zum Einbringen eines Pigments besteht im Einfärben der gesamten Mischung mit Pigment. Dies ist insbesondere dann bevorzugt, wenn eine homogene Farbe des Verbundwerkstoffs gewünscht ist. Da bei diesem Verfahren auch das Harz eingefärbt wird, entsteht ein besonders homogener Farbeindruck.

Bevorzugt ist, dass Partikel des ersten und/oder des zweiten Füllstoffs eine Oberflächenbeschichtung aufweisen, welche die optische Erscheinung des Partikels verändert, wobei bevorzugt verschiedene Partikelfraktionen des Füllstoffs gleichfarbige oder bevorzugt verschiedenfarbige Oberflächenbeschichtungen und/oder eine die Lichtbrechung und/oder die Reflexion verändernde Oberflächenbeschichtung aufweisen. Es besteht somit die Möglichkeit, Partikel des Füllstoffs bevorzugt vor dem Herstellen der (gießfähigen) Mischung einzufärben. Dieses Vorgehen ermöglicht besondere optische Effekte, welche zu einem granitähnlichen oder sandsteinähnlichen Aussehen des Verbundwerkstoffs führen können. Der Farbeindruck des Verbundwerkstoffs ist dabei nicht homogen, sondern einzelne der gefärbten Füllstoffpartikel sind erkennbar.

Dabei wäre es denkbar, dass die Partikel des ersten und des zweiten Füllstoffs gleichartig gefärbt sind. Andererseits wäre es jedoch auch denkbar, dass die Partikel des ersten Füllstoffs eine andere Farbe als die Partikel des zweiten Füllstoffs aufweisen. Da auf der (im Benutzungszustand) die obere Oberfläche jedoch im Wesentlichen durch die Partikel des ersten Füllstoffs charakterisiert wird, wäre es auch denkbar, Mischungen mehrerer unterschiedlich gefärbter erster Füllstoffe einzusetzen. Denkbar wäre beispielsweise, dass einige Partikel des ersten Füllstoffs eine erste Farbe aufweisen, andere Partikel des ersten Füllstoffs eine zweite Farbe aufweisen und wieder andere Partikel des ersten Füllstoffs eine dritte Farbe oder ein Effektpigment aufweisen, welches diesen Partikeln beispielsweise eine besondere Lichtbrechung oder ein besonderes Reflexionsvermögen verleiht.

Bevorzugt umfasst die Oberflächenbeschichtung ein Oberflächenbindemittel. Dieses Bindemittel wird zur Unterscheidung von dem Bindemittel, mit welchem die Partikel der Füllstoffe im Verbundwerkstoff fixiert sind als "Oberflächenbindemittel" bezeichnet. Sofern im Rahmen dieser Erfindung der Begriff "Bindemittel" ohne Angabe eines Bezugssystems verwendet wird, bezieht sich dieser jeweils auf das Bindemittel, mit welchem die Partikel der Füllstoffe im Verbundwerkstoff fixiert sind. Das Bindemittel und das Oberflächenbindemittel können identisch sein, sind jedoch bevorzugt voneinander verschieden. Das Oberflächenbindemittel kann beispielsweise dazu dienen, Pigmentteilchen auf der Oberfläche der Partikel des ersten und/oder des zweiten Füllstoffs zu fixieren. Besonders bevorzugt ist ein Oberflächenbindemittel, welches eine anorganische Komponente umfasst, insbesondere bevorzugt ein anorganisches Oberflächenbindemittel. Überraschenderweise konnte mit einem anorganischen Oberflächenbindemittel der Bindemittelbedarf im Vergleich zu organischen Oberflächenbindemitteln reduziert werden.

Alternativ oder ergänzend zu einer Einstellung der optischen Erscheinung der Partikel ist in einer bevorzugten Ausführungsform vorgesehen, dass das Bindemittel (des Verbundwerkstoffs) ein Pigment enthält, welches dem Bindemittel eine bevorzugt von den Partikeln mindestens eines Füllstoffs verschiedene Farbe verleiht. Somit kann auch das Harz mit Pigmenten versehen werden, um dem Verbundwerkstoff eine einheitliche Grundfarbe zu verleihen, die durch die anders gefärbten Füllstoffpartikel aufgelockert wird.

Bevorzugt ist, dass zwischen dem zweiten Füllstoff (bevorzugt aus Glasschaum) und dem ersten (bevorzugt harten und massiven) Füllstoff (z. B. Quarz) ein deutlicher Dichteunterschied besteht (beispielsweise Quarz: ca. 2.5 kg/l zu Bimsstein ca. 0,7kg/l oder expandiertem Perlit bis zu 0,1 kg/I). Bei einer vorteilhaften Dichte des Polymerharzes von etwa 1 - 1,2 kg/l ermöglicht dies, dass die Partikel des zweiten Füllstoffs sich nicht (wie sonst bei dichteren Partikeln üblich) in der Matrix absetzen, sondern mehr oder weniger im flüssigen Harz schwimmen. Partikel des ersten Füllstoffs hoher Dichte sinken demgegenüber im Harz ab, da deren Mobilität groß genug ist. In Abhängigkeit der Viskosität des Harzes und / oder der Gelzeit des Harzes kann der Gradient eingestellt werden. Bei einem Bindemittel niedriger Viskosität wird die Konzentration von Partikeln des ersten Füllstoffs an der Unterseite eines aus einer derartigen Mischung gegossenen Verbundwerkstoffs stark erhöht sein und somit die Abriebfestigkeit stark erhöht sein. Bei einer höheren Viskosität und / oder kürzeren Gelzeit könnte der Gradient flacher eingestellt werden und die Eigenschaften des Verbundwerkstoffs in gewünschter Weise angepasst werden. Ein (größerer oder nennenswerter) Schrumpf der an ersten Füllstoffpartikeln abgereicherten, in der Gießform oben liegenden Mischung tritt nicht auf, da sich die Partikel des zweiten Füllstoffs gegeneinander abstützen. Das Volumen der Zwischenräume kann durch Harz gefüllt werden, wodurch eine zusätzliche Stabilisierung eintritt.

Erfindungswesentlich ist weiterhin die Verwendung eines wie oben beschriebenen Verbundwerkstoffs als Material für eine Anwendung ausgewählt aus einer Gruppe, die Fußbodenbelag, Wandbelag, Sanitärprodukt - bevorzugt Waschbecken oder Duschtassen, Möbelbau, Küchenspülen, Arbeitsfläche und Arbeitsplatte - bevorzugt Küchenarbeitsplatte umfasst. Da alle diese Verwendungen von der geringen Dichte des Verbundwerkstoffs in Kombination mit der hohen Belastbarkeit zumindest einer Oberfläche des Verbundwerkstoffs profitieren, ist die Verwendung eines erfindungsgemäßen Verbundwerkstoffs für diese Anwendungen besonders vorteilhaft. Grundsätzlich wäre jedoch auch denkbar, den Verbundwerkstoff in anderen Anwendungen wie dem Baugewerbe, dem Fahrzeugbau oder dem Garten- und Landschaftsbau einzusetzen.

Verfahrensseitig wird zur Herstellung eines Verbundwerkstoff (insbesondere eines wie oben beschriebenen Verbundwerkstoffs) ein Verfahren umfassend die folgenden Schritte vorgeschlagen:
- Bereitstellen einer Gießform,
- Bereitstellen eines Harzes,
- Bereitstellen eines ersten Füllstoffs, welcher eine Dichte > 2 kg/l und eine Härte nach Mohs > 4 aufweist,
- Bereitstellen eines vom ersten Füllstoff zumindest in einer Eigenschaft verschiedenen zweiten Füllstoffs, welcher eine Schüttdichte < 2,5 kg/l aufweist, wobei die Partikel des zweiten Füllstoffs ausgewählt sind aus einer Gruppe, die Polymerhohl- kugeln Polymergranulate, Glashohlkugeln, synthetische poröse Glas oder Keramikkugeln, Zeolith, Aluminiumtrihydroxid, expandierten Perlit und Bimsstein umfasst,
- Einstellen einer Viskosität des Harzes, bei welcher sich die Mobilität von Partikeln des ersten Füllstoffs von der Mobilität von Partikeln des zweiten Füllstoffs im Harz unterscheidet,
- Einfüllen der bereitgestellten Substanzen in die Gießform,
- Einstellen einer von einer Basisfläche der Gießform in senkrechter Richtung stetig abnehmender Konzentration des ersten Füllstoffs im Harz unter Ausnutzung der unterschiedlichen Mobilität der Partikel des ersten Füllstoffs und der Mobilität der Partikel des zweiten Füllstoffs, und
- anschließendes Aushärten des Harzes zur Ausbildung eines Verbundwerkstoffs.

Durch ein solches Verfahren ist die Herstellung eines Verbundwerkstoffs mit den oben genannten Vorteilen sehr einfach möglich.

Die oben für den Verbundwerkstoff beschriebenen bevorzugten Ausführungsformen können gegebenenfalls entsprechende Anpassungen dieses Verfahrens erfordern. Diese ergeben sich aus den für den Verbundwerkstoff beschriebenen Abwandlungen.

Bevorzugt werden die oben angegebenen Verfahrensschritte in der angegebenen Reihenfolge durchgeführt. Dies ist jedoch nicht zwingend erforderlich. Beispielsweise ist es denkbar, dass der Schritt des Einstellens der gewünschten Viskosität des Harzes erst nach dem Schritt des Einfüllens des Harzes in die Gießform erfolgt.

In einer bevorzugten Verfahrensvariante ist vorgesehen, dass auf Partikel des ersten und/oder des zweiten Füllstoffs vor dem Vermischen mit dem Harz eine die optische Erscheinung der Partikel verändernde Oberflächenbeschichtung aufgebracht wird, wobei bevorzugt auf verschiedene Partikelfraktionen des Füllstoffs gleichfarbige oder bevorzugt verschiedenfarbige Oberflächenbeschichtungen und/oder eine die Lichtbrechung und/oder die Reflexion verändernde Oberflächenbeschichtung aufgebracht wird. Durch diese Vorbehandlung von Füllstoffpartikeln kann dem Verbundwerkstoff ein besonderer optischer Effekt verliehen werden.

Außerdem oder ergänzend dazu ist eine Verfahrensvariante vorteilhaft, bei welcher dem Harz ein Pigment beigemischt wird, welches dem Harz eine bevorzugt von den Partikeln mindestens eines Füllstoffs verschiedene Farbe verleiht. Das Beimengen dieses Pigments zum Harz kann vor, nach oder zusammen mit dem Beimengen eines Füllstoffs erfolgen. Das Einfärben des Harzes verleiht dem Verbundwerkstoff eine gewünschte Grundfarbe, von welcher sich - sofern gewünscht - Füllstoffpartikel optisch absetzen und so beispielsweise aufgrund der anderen Farbe oder einer verstärkten Reflexion als Effektpartikel fungieren.

Auch der Schritt des Einfüllens der bereitgestellten Substanzen in die Gießform kann entsprechend der jeweiligen Anforderungen angepasst werden. Wie unten in einem der Beispiele angegeben ist, wird in einer bevorzugten Verfahrensvariante der erste und der zweite Füllstoff miteinander vermischt und gemeinsam mit dem Harz vermengt. Das Harz kann sich dabei bereits in der Gießform befinden. Alternativ dazu kann das Vermengen mit zumindest einem Anteil des Harzes außerhalb der Gießform erfolgen. Denkbar ist auch, dass zumindest Teile (aber auch die gesamte Menge) eines der Füllstoffe getrennt von dem anderen Füllstoff dem Harz zugegeben wird. So ist beispielsweise in einer Variante bevorzugt. Das Harz mit einem Füllstoff (und gegebenenfalls einem Anteil des anderen Füllstoffs) zu vermengen und in die Gießform zu geben. Der verbleibende Anteil des anderen Füllstoffs wird erst zu einem späteren Zeitpunkt in die Gießform gegeben, bevorzugt zu einem Zeitpunkt, zu dem sich die Viskosität des Harzes (bzw. der bereits in der Gießform befindlichen Mischung) erhöht hat. Durch diese Viskositätserhöhung ist die Mobilität der Partikel des erst später zugegebenen Füllstoffs reduziert, so dass die Ausbildung des gewünschten Gradienten der Verteilung von erstem und zweitem Füllstoff gefördert wird.

Bevorzugt kann bereits eine Mischung umfassend ein Harz und ca. 50 Vol.% Feststoffanteil aus Partikeln eines ersten und zweiten Füllstoffs eingesetzt werden. Die räumliche Trennung der ersten und zweiten Füllstoffe durch An- beziehungsweise Abreicherung in verschiedenen Bereichen der Gießform erfolgt bevorzugt gravitationsgetrieben und kann optional durch geeignete unterstützende Maßnahmen wie beispielsweise Vibration, Anlegen elektrischer und/oder magnetischer Felder, Einstellung einer vorgegebenen Temperatur oder eines vorgegebenen Temperaturverlaufs während der Aushärtung des Harzes gefördert und/oder kontrolliert werden.

Diese lokale An- beziehungsweise Abreicherung erfolgt üblicherweise bis das Polymer anfängt zu gelieren. Die Einstellung der Viskosität und/oder der Gelzeit stellt somit eine weitere Möglichkeit der Einstellung der Eigenschaften des Verbundwerkstoffs dar. Außerdem kann durch geeignete Verfahrenssteuerung (beispielsweise Einstellung eines vorgegebenen Temperaturverlaufs während der Gelbildung) der Ort des Einsetzens und das Fortschreiten des Gelierens im Harz gesteuert werden. Auch dies ermöglicht (alternativ oder zusätzlich zu oben beschriebenen Maßnahmen) die Kontrolle und Steuerung der lokalen An- beziehungsweise Abreicherung der Partikel des ersten und zweiten Füllstoffs.

### Beispiel:

Eine Mischung aus 90 Gewichts-% Bims einer Partikelgröße von 0,25 - 0,5 mm wird mit 10 Gewichts-% eines Sandes einer Partikelgröße von 0,63 - 0,3 mm gemischt. Diese Mischung wird mit einem Bindemittel derart vermengt, dass der Füllgrad 50 - 60 Gew.-% beträgt. Nach dem Aushärten des daraus hergestellten Verbundwerkstoffs in einer Gießform kann durch Taber Abrasor Test ein Abrieb von nur 18 µg pro 100 Zyklen ermittelt werden. Die Dichte des Verbundwerkstoffs beträgt ca. 1,3 - 1,4 kg/l. der Verbundwerkstoff ist mit einem Hartmetall-Sägeblatt trocken ohne Funkenbildung zu schneiden.

Weitere Vorteile und Ausführungsformen ergeben sich aus den beigefügten Figuren:
Darin zeigen:
- Fig. 1: einen Schnitt durch einen erfindungsgemäßen Verbundwerkstoff in einer ersten Ausführungsform,
- Fig. 2: einen Schnitt durch einen erfindungsgemäßen Verbundwerkstoff in einer zweiten Ausführungsform;
- Fig. 3: einen Schnitt durch einen erfindungsgemäßen Verbundwerkstoff in einer dritten Ausführungsform;

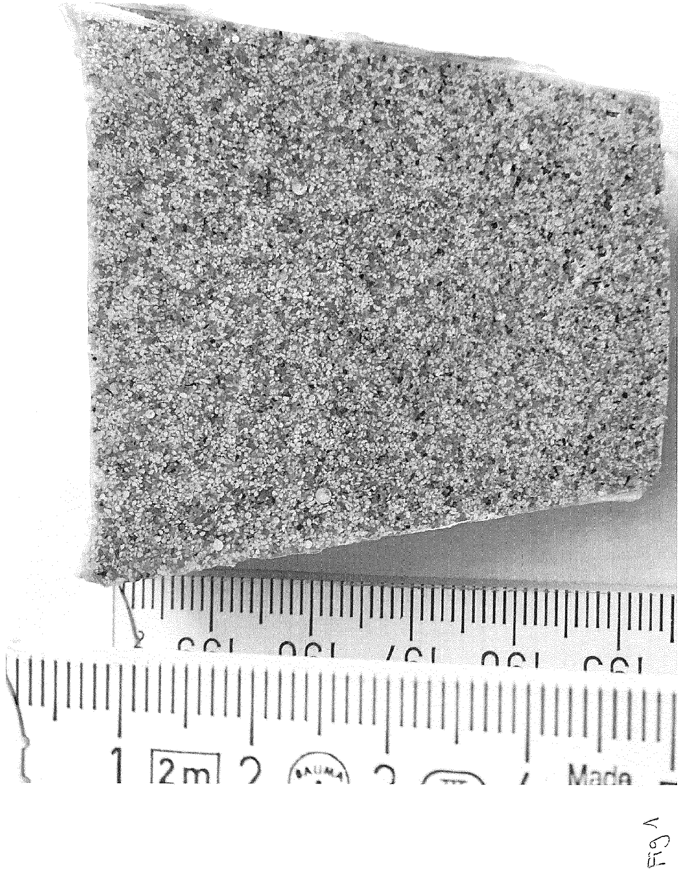

In den Figuren 1 - 3 sind jeweils verschiedene Ausführungsformen eines erfindungsgemäßen Verbundwerkstoffs dargestellt. Alle Ausführungsformen enthalten dunkel eingefärbten Sand als ersten Füllstoff und Bims als zweiten Füllstoff. Das Bindemittel ist jeweils identisch.

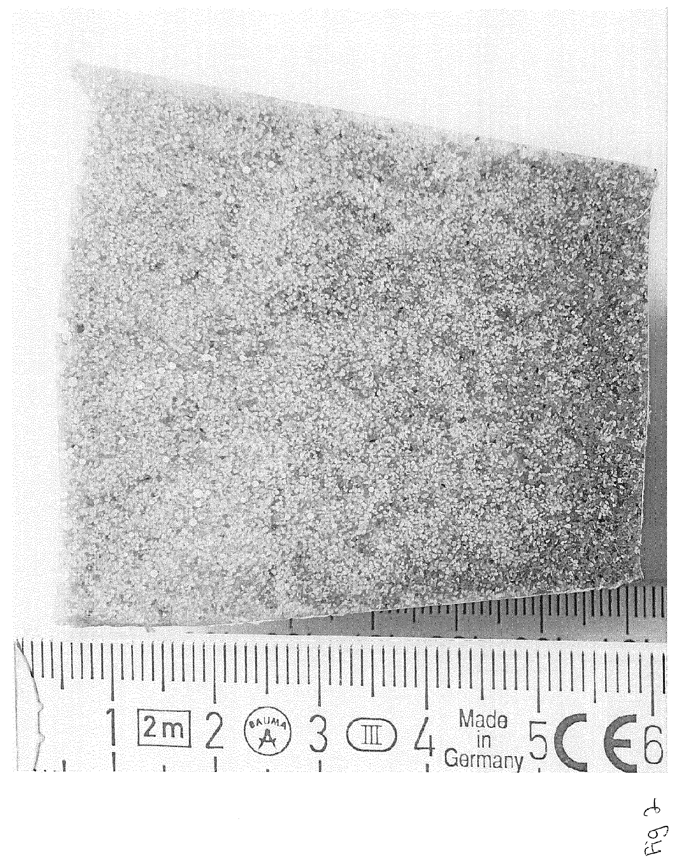

Bei den in den Figuren 1 und 2 dargestellten Ausführungsformen des erfindungsgemäßen Verbundwerkstoffs sind der erste Füllstoff und der zweite Füllstoff sowie das Bindemittel jeweils identisch. Die in den Figuren 1 und 2 dargestellten Verbundwerkstoffe unterscheiden sich dennoch in dem Verlauf des Gradienten, mit dem die Konzentration des ersten (dunkleren) Füllstoffs mit abnehmender Höhe abnimmt. Während bei dem in Figur 1 dargestellten Verbundwerkstoff die Gelzeit des Bindemittels äußerst kurz gewählt wurde, basiert der in Figur 2 dargestellte Verbundwerkstoff auf einer Mischung, die eine lange Gelzeit des Bindemittels aufwies. Durch die längere Gelzeit bestand bei der in Figur 2 dargestellten Mischung eine vergleichsweise lange Zeit, die für die An- beziehungsweise Abreicherung der Partikel des ersten und zweiten Füllstoffs in bestimmten Bereichen des Verbundwerkstoffs zur Verfügung stand. Dementsprechend weist die in Figur 1 dargestellte Ausführungsform einen äußerst flachen Gradienten auf, während der Gradient, bei der in Figur 2 dargestellten Ausführungsform, deutlich erkennbar ist.

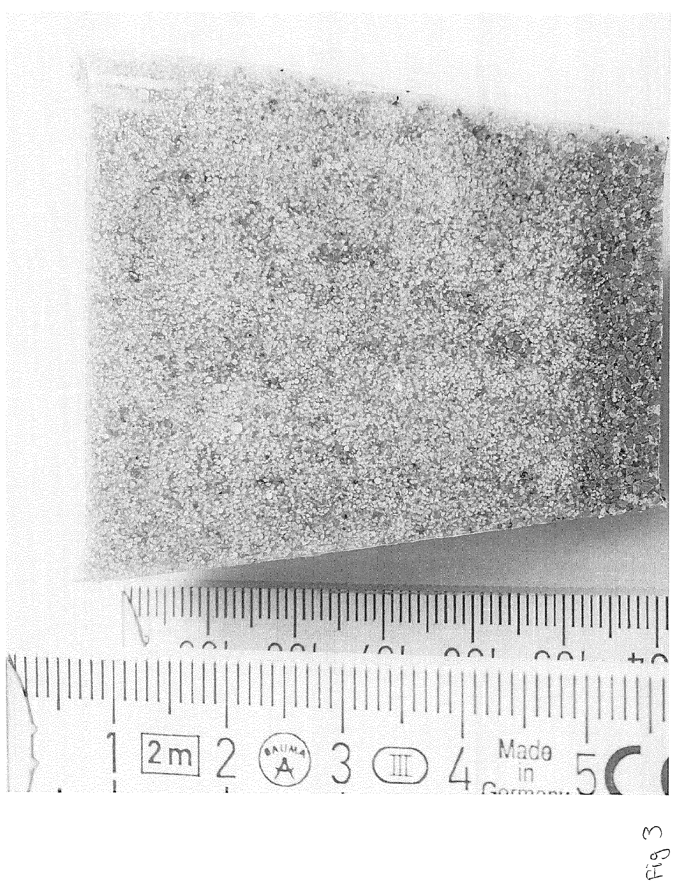

Durch einen Vergleich der in den Figuren 1 und 2 dargestellten Ausführungsformen des erfindungsgemäßen Verbundwerkstoffs ist auch der Einfluss der Partikelgröße auf die Steilheit des Gradienten ersichtlich. Die Art der ersten und zweiten Füllstoffe ist identisch (gefärbter Sand), jedoch ist die mittlere Partikelgröße (d₅₀ Sedigraph) der ersten Füllstoffe in den in den Figuren 1 und 2 dargestellten Ausführungsformen des erfindungsgemäßen Verbundwerkstoffs verschieden. Die bei der in Figur 3 gezeigten Ausführungsform verwendeten Partikel der ersten Füllstoffe weisen eine größere Partikelgröße (d₅₀ Sedigraph) auf als diejenigen der ersten Füllstoffe im in Figur 2 gezeigten Verbundwerkstoff. Die größere Partikelgröße führt bei gleicher Gelzeit des Bindemittels zu einem gegenüber der in Figur 2 dargestellten Ausführungsform nochmals steileren Gradienten der Abnahme der Konzentration der Partikel des ersten Füllstoffs.

Wie aus diesen Figuren ersichtlich ist, kann demnach außer über die Auswahl der jeweiligen verschiedenen Füllstoffe auch über die Viskosität der Mischung, die Gezeit und die Korngrößenverteilung des ersten Füllstoffs der Gradient der Abnahme der Konzentration der Partikel des ersten Füllstoffs beeinflusst und entsprechend den Vorgaben an den jeweiligen Verbundwerkstoff eingestellt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

## Patentansprüche

1. Verbundwerkstoff, umfassend ein Bindemittel und mindestens einen ersten und mindestens einen zweiten Füllstoff, wobei
der erste Füllstoff eine Dichte > 2 kg/l und eine Härte nach Mohs > 4 aufweist und der zweite Füllstoff eine Schüttdichte < 2,5 kg/l aufweist wobei die Partikel des zweiten Füllstoffs ausgewählt sind aus einer Gruppe, die Polymerhohlkugeln, Polymergranulate, Glashohlkugeln, synthetische poröse Glas oder Keramikkugeln, Zeolith, Aluminiumtrihydroxid, expandierten Perlit und Bimsstein umfasst,
**dadurch gekennzeichnet, dass**
die Konzentration des ersten Füllstoffs im Verbundwerkstoff ausgehend von einer ersten Oberfläche des Verbundwerkstoffs in Richtung einer gegenüberliegenden zweiten Oberfläche des Verbundwerkstoffs stetig abnimmt.

2. Verbundwerkstoff nach Anspruch 1,
**dadurch gekennzeichnet, dass**
die Abnahme der Konzentration des ersten Füllstoffs im Verbundwerkstoff ausgehend von der ersten Oberfläche des Verbundwerkstoffs in Richtung der zweiten Oberfläche durch eine stetige Funktion beschreibbar ist, welche bevorzugt einen geradlinigen Verlauf hat oder gekrümmt ist, wobei diese Funktion bevorzugt eine Exponentialfunktion ist, insbesondere bevorzugt eine Exponentialfunktion mit einer Basis < 1.

3. Verbundwerkstoff nach Anspruch 1 oder 2,
**dadurch gekennzeichnet, dass**
die Zunahme der Konzentration des zweiten Füllstoffs im Verbundwerkstoff ausgehend von der ersten Oberfläche des Verbundwerkstoffs in Richtung der zweiten Oberfläche des Verbundwerkstoffs durch eine stetige Funktion beschreibbar ist, welche bevorzugt einen geradlinigen Verlauf hat oder gekrümmt ist, wobei diese Funktion bevorzugt eine Exponentialfunktion ist, insbesondere bevorzugt eine Exponentialfunktion mit einer Basis > 1.

4. Verbundwerkstoff nach einem der vorangegangenen Ansprüche,
**dadurch gekennzeichnet, dass**
Partikel des ersten Füllstoffs und die Partikel des zweiten Füllstoffs sich in mindestens einer Eigenschaft unterscheiden, die eine Trennung und/oder eine An- oder Abreicherung innerhalb vorgegebener Bereiche des Verbundwerkstoffs vor dessen Aushärtung ermöglicht, wobei die unterscheidende Eigenschaft bevorzugt ausgewählt ist aus einer Gruppe, die Dichte, Korngröße (Sedigraph), Morphologie und Kontaktwinkel zum Bindemittel umfasst.

5. Verbundwerkstoff nach einem der vorangegangenen Ansprüche,
**dadurch gekennzeichnet, dass**
die Konzentration des ersten Füllstoffs im Verbundwerkstoff entlang einer Höhenrichtung des Verbundwerkstoffs abnimmt, wobei der Verbundwerkstoff eine Ausdehnung in Höhenrichtung von ≤ 10 cm, bevorzugt ≤ 7 cm, bevorzugt ≤ 6 cm, besonders bevorzugt ≤ 5 cm, bevorzugt ≤ 4 cm, besonders bevorzugt ≤ 3 cm aufweist und insbesondere bevorzugt eine Höhe zwischen 1 und 5 cm aufweist.

6. Verbundwerkstoff nach einem der vorangegangenen Ansprüche,
**dadurch gekennzeichnet, dass**
der erste und/oder der zweite Füllstoff ein isotropes körniges Material umfasst.

7. Verbundwerkstoff nach einem der vorangegangenen Ansprüche,
**dadurch gekennzeichnet, dass**
das Bindemittel ein viskoses Harz ist, welches bevorzugt eine Viskosität ≥ 25 mPa•s, bevorzugt ≥ 50 mPa•s, bevorzugt ≥ 100 mPa•s, besonders bevorzugt ≥ 250 mPa•s, insbesondere bevorzugt ≥ 300 mPa•s, gegebenenfalls ≥ 500 mPa•s oder
≥ 750 mPa•s und/oder ≤ 10.000 mPa•s, bevorzugt ≤ 5.000 mPa•s, bevorzugt
≤ 1.200 mPa•s, besonders bevorzugt ≤ 750 mPa•s, insbesondere bevorzugt
≤ 500 mPa•s aufweist, wobei das Harz bevorzugt ein Acrylharz und/oder Polyesterharz und/oder PU-Harz umfasst.

8. Verbundwerkstoff nach einem der vorangegangenen Ansprüche,
**dadurch gekennzeichnet, dass**
eine Änderung des Wärmeausdehnungskoeffizienten ausgehend von der ersten Oberfläche des Verbundwerkstoffs in Richtung der zweiten Oberfläche des Verbundwerkstoffs einen stetigen Verlauf aufweist.

9. Verbundwerkstoff nach einem der vorangegangenen Ansprüche,
**dadurch gekennzeichnet, dass**
der erste Füllstoff eine Partikelgröße (d₅₀ Sedigraph) ≥ 0,5 µm, bevorzugt ≥ 1 µm, bevorzugt ≥ 2 µm, bevorzugt ≥ 3 µm, besonders bevorzugt ≥ 5 µm, bevorzugt ≥ 10 µm, bevorzugt ≥ 20 µm und/oder eine Partikelgröße (d₅₀ Sedigraph) ≤ 1000 µm, bevorzugt ≤ 500 µm, bevorzugt ≤ 200 µm, bevorzugt ≤ 100 µm, bevorzugt ≤ 50 µm, bevorzugt ≤ 20 µm, bevorzugt ≤ 10 µm aufweist.

10. Verbundwerkstoff nach einem der vorangegangenen Ansprüche,
**dadurch gekennzeichnet, dass**
Partikel des ersten und/oder des zweiten Füllstoffs eine Oberflächenbeschichtung aufweisen, welche die optische Erscheinung des Partikels verändert, wobei bevorzugt verschiedene Partikelfraktionen des Füllstoffs gleichfarbige oder bevorzugt verschiedenfarbige Oberflächenbeschichtungen und/oder eine die Lichtbrechung und/oder die Reflexion verändernde Oberflächenbeschichtung aufweisen.

11. Verbundwerkstoff nach einem der vorangegangenen Ansprüche,
**dadurch gekennzeichnet, dass**
das Bindemittel ein Pigment enthalt, welches dem Bindemittel eine bevorzugt von den Partikeln mindestens eines Füllstoffs verschiedene Farbe verleiht.

12. Verwendung eines Verbundwerkstoffs nach einem der vorangegangenen Ansprüche als Material für eine Anwendung ausgewählt aus einer Gruppe, die Fußbodenbelag, Wandbelag, Sanitärprodukt - bevorzugt Waschbecken oder Duschtassen, Möbelbau, Küchenspülen, Arbeitsfläche und Arbeitsplatte - bevorzugt Küchenarbeitsplatte umfasst.

13. Verfahren zur Herstellung eines Verbundwerkstoff, umfassend die Schritte:
- Bereitstellen einer Gießform,
- Bereitstellen eines Harzes,
- Bereitstellen eines ersten Füllstoffs, welcher eine Dichte > 2 kg/l und eine Härte nach Mohs > 4 aufweist,
- Bereitstellen eines vom ersten Füllstoff zumindest in einer Eigenschaft verschiedenen zweiten Füllstoffs, welcher eine Schüttdichte < 2,5 kg/l aufweist, wobei die Partikel des zweiten Füllstoffs ausgewählt sind aus einer Gruppe, die Polymerhohlkugeln Polymergranulate, Glashohlkugeln, synthetische poröse Glas oder Keramikkugeln, Zeolith, Aluminiumtrihydroxid, expandierten Perlit und Bimsstein umfasst,
- Einstellen einer Viskosität des Harzes, bei welcher sich die Mobilität von Partikeln des ersten Füllstoffs von der Mobilität von Partikeln des zweiten Füllstoffs im Harz unterscheidet,
- Einfüllen der bereitgestellten Substanzen in die Gießform,
- Einstellen einer von einer Basisfläche der Gießform in senkrechter Richtung stetig abnehmender Konzentration des ersten Füllstoffs im Harz unter Ausnutzung der unterschiedlichen Mobilität der Partikel des ersten Füllstoffs und der Mobilität der Partikel des zweiten Füllstoffs, und
- anschließendes Aushärten des Harzes zur Ausbildung eines Verbundwerkstoffs.

14. Verfahren zur Herstellung eines Verbundwerkstoff nach Anspruch 13,
**dadurch gekennzeichnet, dass**
auf Partikel des ersten und/oder des zweiten Füllstoffs vor dem Vermischen mit dem Harz eine die optische Erscheinung der Partikel verändernde Oberflächenbeschichtung aufgebracht wird, wobei bevorzugt auf verschiedene Partikelfraktionen des Füllstoffs gleichfarbige oder bevorzugt verschiedenfarbige Oberflächenbeschichtungen und/oder eine die Lichtbrechung und/oder die Reflexion verändernde Oberflächenbeschichtung aufgebracht wird.

15. Verfahren zur Herstellung eines Verbundwerkstoff nach Anspruch 13 oder 14,
**dadurch gekennzeichnet, dass**
dem Harz ein Pigment beigemischt wird, welches dem Harz eine bevorzugt von den Partikeln mindestens eines Füllstoffs verschiedene Farbe verleiht.

## Claims

1. A composite material comprising a binder and at least one first and at least one second filler, wherein
the first filler has a density > 2 kg/l and a Mohs hardness > 4 and
the second filler has a bulk density < 2.5 kg/l wherein the particles of the second filler are selected from a group comprising hollow polymer spheres, hollow polymer granules, hollow glass spheres, synthetic porous glass or ceramic spheres, zeolite, aluminium trihydroxide, expanded perlite and pumice,
**characterised in that**
the concentration of the first filler in the composite material decreases continuously from a first surface of the composite material towards an opposite second surface of the composite material.

2. Composite material according to claim 1,
**characterised in that**
the decrease in the concentration of the first filler in the composite material starting from the first surface of the composite material in the direction of the second surface can be described by a continuous function which preferably has a straight line or is curved, this function preferably being an exponential function, in particular preferably an exponential function with a base < 1.

3. Composite material according to claim 1 or 2,
**characterised in that**
the increase in the concentration of the second filler in the composite material starting from the first surface of the composite material in the direction of the second surface of the composite material can be described by a continuous function which preferably has a straight line or is curved, this function preferably being an exponential function, in particular preferably an exponential function with a base > 1.

4. Composite material according to one of the preceding claims,
**characterised in that**
particles of the first filler and the particles of the second filler differ in at least one property which enables separation and/or enrichment or depletion within predetermined regions of the composite material prior to curing thereof, wherein the differentiating property is preferably selected from a group comprising density, grain size (sedigraph), morphology and contact angle to the binder.

5. Composite material according to one of the preceding claims,
**characterised in that**
the concentration of the first filler in the composite material decreases along a height direction of the composite material, wherein the composite material has an extension in the height direction of ≤ 10 cm, preferably ≤ 7 cm, preferably ≤ 6 cm, particularly preferably ≤ 5 cm, preferably ≤ 4 cm, particularly preferably ≤ 3 cm and particularly preferably has a height of between 1 and 5 cm.

6. Composite material according to one of the preceding claims,
**characterised in that**
the first and/or the second filler comprises an isotropic granular material.

7. Composite material according to one of the preceding claims,
**characterised in that**
the binder is a viscous resin which preferably has a viscosity ≥ 25 mPa·s, preferably ≥ 50 mPa·s, preferably ≥ 100 mPa·s, particularly preferably ≥ 250 mPa·s, especially preferably ≥ 300 mPa·s, optionally ≥ 500 mPa.s or ≥ 750 mPa.s and/or ≤ 10.000 mPa·s, preferably ≤ 5,000 mPa·s, preferably ≤ 1,200 mPa·s, particularly preferably ≤ 750 mPa·s, especially preferably ≤ 500 mPa•s, wherein the resin preferably comprises an acrylic resin and/or polyester resin and/or PU resin.

8. Composite material according to one of the preceding claims,
**characterised in that**
a change in the coefficient of thermal expansion starting from the first surface of the composite material in the direction of the second surface of the composite material exhibits a continuous progression.

9. Composite material according to one of the preceding claims,
**characterised in that**
the first filler has a particle size (d₅₀Sedigraph) ≥ 0.5 µm, preferably ≥ 1 µm, preferably ≥ 2 µm, preferably ≥ 3 µm, particularly preferably ≥ 5 µm, preferably ≥ 10 µm, preferably ≥ 20 µm and/or a particle size (d₅₀Sedigraph) ≤ 1000 µm, preferably ≤ 500 µm, preferably ≤ 200 µm, preferably ≤ 100 µm, preferably ≤ 50 µm, preferably ≤ 20 µm, preferably ≤ 10 µm.

10. Composite material according to one of the preceding claims,
**characterised in that**
particles of the first and/or the second filler have a surface coating which alters the optical appearance of the particle, wherein preferably different particle fractions of the filler have surface coatings of the same colour or preferably of different colours and/or a surface coating which alters the refraction and/or the reflection.

11. Composite material according to one of the preceding claims,
**characterised in that**
the binder contains a pigment which imparts to the binder a colour which is preferably different from the particles of at least one filler.

12. Use of a composite material according to any one of the preceding claims as a material for an application selected from a group comprising floor covering, wall covering, sanitary product - preferably washbasins or shower trays, furniture construction, kitchen sinks, worktop and worksurface - preferably kitchen worktop.

13. A method of manufacturing a composite material comprising the steps of:
- Provide a casting mould,
- Providing a resin,
- Providing a first filler which has a density > 2 kg/l and a Mohs hardness > 4,
- providing a second filler which differs from the first filler in at least one property and which has a bulk density < 2.5 kg/l, wherein the particles of the second filler are selected from a group comprising hollow polymer spheres, polymer granules, hollow glass spheres, synthetic porous glass or ceramic spheres, zeolite, aluminium trihydroxide, expanded perlite and pumice,
- adjusting a viscosity of the resin at which the mobility of particles of the first filler differs from the mobility of particles of the second filler in the resin,
- Filling the prepared substances into the mould,
- adjusting a concentration of the first filler in the resin which decreases continuously in the vertical direction from a base surface of the mould by using the different mobility of the particles of the first filler and the mobility of the particles of the second filler, and
- subsequent curing of the resin to form a composite material.

14. A method of manufacturing a composite material according to claim 13,
**characterised in that**
a surface coating which alters the optical appearance of the particles is applied to particles of the first and/or the second filler before mixing with the resin, wherein surface coatings of the same colour or preferably of different colours and/or a surface coating which alters the refraction and/or the reflection are preferably applied to different particle fractions of the filler.

15. A method of manufacturing a composite material according to claim 13 or 14,
**characterised in that**
a pigment is added to the resin which imparts a colour to the resin which is preferably different from the particles of at least one filler.

## Revendications

1. Matériau composite comportant un liant et au moins une première et au moins une seconde charge, dans lequel
la première charge présente une masse volumique > 2 kg/l et une dureté selon Mohs > 4 et la seconde charge présente une masse volumique apparente < 2,5 kg/l, les particules de la seconde charge étant choisies dans un groupe qui comporte les billes creuses de polymère, les granulats de polymère, les billes creuses de verre, les billes de verre poreux synthétique ou de céramique poreuse synthétique, la zéolite, d l'hydroxyde d'aluminium, la perlite expansée et la pierre ponce,
**caractérisé par le fait que**
la concentration de la première charge dans le matériau composite diminue en continu en partant d'une première surface du matériau composite en direction d'une seconde surface opposée du matériau composite.

2. Matériau composite selon la revendication 1,
**caractérisé par le fait que**
la diminution de la concentration de la première charge dans le matériau composite à partir de la première surface du matériau composite en direction de la seconde surface peut être décrite par une fonction continue, laquelle, de préférence, a une allure rectiligne ou est courbe, cette fonction étant, de préférence, une fonction exponentielle, en particulier de préférence une fonction exponentielle de base < 1.

3. Matériau composite selon l'une des revendications 1 ou 2,
**caractérisé par le fait que**
l'augmentation de la concentration de la seconde charge dans le matériau composite en partant de la première surface du matériau composite en direction de la seconde surface du matériau composite peut être décrite par une fonction continue, laquelle, de préférence, a une allure rectiligne ou est courbe, cette fonction étant, de préférence, une fonction exponentielle, en particulier de préférence une fonction exponentielle de base > 1.

4. Matériau composite selon l'une des revendications précédentes,
**caractérisé par le fait que**
les particules de la première charge et les particules de la seconde charge diffèrent par au moins une propriété qui permet une séparation et/ou un enrichissement ou un appauvrissement à l'intérieur de zones prédéterminées du matériau composite avant son durcissement, la propriété distinctive étant, de préférence, choisie dans un groupe qui comporte la densité, la taille de grain (Sedigraph), la morphologie et l'angle de contact avec le liant.

5. Matériau composite selon l'une des revendications précédentes,
**caractérisé par le fait que**
la concentration de la première charge dans le matériau composite diminue le long d'une direction de la hauteur du matériau composite, le matériau composite présentant une étendue dans la direction de la hauteur de ≤ 10 cm, de préférence ≤ 7 cm, de préférence ≤ 6 cm, de façon particulièrement préférée ≤ 5 cm, de préférence ≤ 4 cm, de façon particulièrement préférée ≤ 3 cm, et présentant de façon particulièrement préférée une hauteur entre 1 et 5 cm.

6. Matériau composite selon l'une des revendications précédentes,
**caractérisé par le fait que**
la première et/ou la seconde charge comporte(nt) un matériau granulaire isotrope.

7. Matériau composite selon l'une des revendications précédentes,
**caractérisé par le fait que**
le liant est une résine visqueuse, laquelle présente, de préférence, une viscosité ≥ 25 mPa*s, de préférence ≥ 50 mPa*s, de préférence ≥ 100 mPa*s, de façon particulièrement préférée ≥ 250 mPa*s, de façon particulièrement préférée ≥ 300 mPa*s, le cas échéant ≥ 500 mPa*s ou ≥ 750 mPa*s et/ou ≤ 10.000 mPa*s, de préférence ≤ 5 000 mPa*s, de préférence ≤ 1 200 mPa*s, de façon particulièrement préférée ≤ 750 mPa*s, de façon tout particulièrement préférée ≤ 500 mPa*s, la résine comportant, de préférence, une résine acrylique et/ou une résine de polyester et/ou une résine de PU.

8. Matériau composite selon l'une des revendications précédentes,
**caractérisé par le fait qu'**
une variation du coefficient de dilatation thermique en partant de la première surface du matériau composite en direction de la seconde surface du matériau composite présente une allure continue.

9. Matériau composite selon l'une des revendications précédentes,
**caractérisé par le fait que**
la première charge a une taille de particule (d₅₀ SediGraph) ≥ 0,5 µm, de préférence ≥ 1 µm, de préférence ≥ 2 µm, de préférence ≥ 3 µm, de façon particulièrement préférée ≥ 5 µm, de préférence ≥ 10 µm, de préférence ≥ 20 µm et/ou une taille de particule (d₅₀ SediGraph) ≤ 1000 µm, de préférence ≤ 500 µm, de préférence ≤ 200 µm, de préférence ≤ 100 µm, de préférence ≤ 50 µm, de préférence ≤ 20 µm, de préférence ≤ 10 µm.

10. Matériau composite selon l'une des revendications précédentes,
**caractérisé par le fait que**
les particules de la première et/ou de la seconde charge présentent un revêtement de surface, lequel modifie l'aspect optique de la particule, différentes fractions de particules de la charge présentant, de préférence, des revêtements de surface de même couleur ou, de préférence, de couleurs différentes et/ou un revêtement de surface modifiant la réfraction de la lumière et/ou la réflexion.

11. Matériau composite selon l'une des revendications précédentes,
**caractérisé par le fait que**
le liant contient un pigment, lequel confère au liant une couleur de préférence différente de celle des particules d'au moins une charge.

12. Utilisation d'un matériau composite selon l'une des revendications précédentes en tant que matériau pour une application choisie dans un groupe qui comporte un revêtement de sol, un revêtement mural, un produit sanitaire - de préférence un lavabo ou un bac à douche, un meuble, un évier de cuisine, une surface de travail et un plan de travail - de préférence un plan de travail de cuisine.

13. Procédé de fabrication d'un matériau composite, comportant les étapes consistant à :
- préparer un moule ;
- préparer une résine ;
- préparer une première charge, laquelle présente une masse volumique > 2 kg/l et une dureté selon Mohs > 4 ;
- préparer une seconde charge qui diffère de la première charge au moins par une propriété et qui présente une masse volumique apparente < 2,5 kg/l, les particules de la seconde charge étant choisies dans un groupe qui comporte les billes creuses de polymère, les granulats de polymère, les billes creuses de verre, les billes de verre poreux synthétique ou de céramique poreuse synthétique, la zéolite, l'hydroxyde d'aluminium, la perlite expansée et la pierre ponce ;
- ajuster une viscosité de la résine à laquelle la mobilité des particules de la première charge est différente de la mobilité des particules de la seconde charge dans la résine ;
- verser les substances préparées dans le moule ;
- ajuster une concentration de la première charge dans la résine, décroissant en continu dans une direction verticale à partir d'une surface de base du moule, en utilisant la mobilité différente des particules de la première charge et la mobilité des particules de la seconde charge ; et
- faire durcir ensuite la résine pour former un matériau composite.

14. Procédé de fabrication d'un matériau composite selon la revendication 13,
**caractérisé par le fait qu'**
un revêtement de surface modifiant l'aspect optique des particules est appliqué sur des particules de la première et/ou de la seconde charge avant le mélange avec la résine, où, de préférence, des revêtements de surface de même couleur ou, de préférence, de couleurs différentes et/ou un revêtement de surface modifiant la réfraction de la lumière et/ou la réflexion étant appliqués sur différentes fractions de particules de la charge.

15. Procédé de fabrication d'un matériau composite selon l'une des revendications 13 ou 14,
**caractérisé par le fait que**
l'on mélange à la résine un pigment, lequel confère à la résine une couleur de préférence différente de celle des particules d'au moins une charge.
